# EUROPEAN PATENT SPECIFICATION

(11) **EP 2 878 810 B1**
(45) Date of publication and mention of the grant of the patent: **01.09.2021**
(21) Application number: 14190699.0
(22) Date of filing: 28.10.2014
(51) Int. Cl.: F03D 7/02, F03D 7/04

(54) **Method of controlling generation quantity of wind power plant**
Verfahren zur Steuerung der Erzeugungsmenge einer Windenergieanlage
Procédé de commande de quantité de génération d'énergie d'une centrale éolienne

(30) Priority: 02.12.2013 KR 20130148290
(43) Date of publication of application: 03.06.2015
(73) Proprietor: Doosan Heavy Industries & Construction Co., Ltd., Changwon-si Gyeongsangnam-do 642-792 (KR)
(72) Inventor: Woo, Sang Woo, 306-710 Daejeon (KR)
(74) Representative: Isarpatent

(56) References cited:
- EP-A1- 2 778 404
- US-A1- 2010 135 790
- US-A1- 2011 229 322
- US-A1- 2011 270 450
- US-A1- 2012 139 241
- None

## Description

### BACKGROUND

Exemplary embodiments of the present invention relate to the improvement of the generation quantity of a wind power generator, and more particularly, to a method of controlling the generation quantity of a wind power plant, which is capable of improving the generation quantity of a wind power plant by patterning a reduction in the generation quantity of a plurality of wind power generators installed in the wind power plant or a generation quantity reduction state due to the lapse of a period after the wind power plant is driven.

In general, wind power generation is technology in which wind power is converted into mechanical energy by rotating a rotor using the aerodynamic characteristic of kinetic energy in the flow of air and induction electricity generated by the mechanical energy is supplied to a power system or demanders. Such wind power generation technology is a generation method having a clean and eco-friendly property because wind resources (i.e., the wind) are an abundant and renewable energy source and do not discharge pollution.

Wind power generation is disadvantageous in that wind power generators are installed at specific areas because power generation is impossible if the wind is rare due to a low energy density, but is advantageous in that power generation is infinite if a proper amount of wind is present.

A wind power generator is divided into a horizontal type and a vertical type depending on the direction of a rotation shaft to the ground. The wind power generator basically includes a rotor configured to include a blade and a hub, a gearbox configured to drive a generator by accelerating rotation, the generator configured to produce electricity, a control device configured to control various safety devices, a brake device, a power control device, and a steel tower.

In wind power generation having such characteristics, in order to uniformly maintain a total generation quantity of a wind power plant, a plurality of wind power generators needs to be configured and each of the wind power generators needs to be stably driven.

If dust or alien substances are adhered to the wind power generators installed in the wind power plant, a generation quantity is reduced due to an increase of resistance attributable to the rotation of the blades or a generation quantity is reduced due to changes in the weather at the location where the wind power plant is installed. Furthermore, the generation quantity of a wind power plant is reduced according to a lapse of a period after the wind power plant is installed. Accordingly, there is a need for a proper method of controlling a generation quantity.

### [Prior Art Document]

### [Patent Document]

Korean Patent Application Publication No.10-2013-0078680 (July 10, 2013) The following further prior art documents disclose further technological background art for the present invention:
D1 EP 2 778 404
D2 US 2011/270450
D3 US 2010/135790 A1
Documents D1 and D2 both relate to the control of a generation quantity of a wind power plant. Document D1 is a document only relevant under Art. 54(3) EPC. In both documents D1 and D2 the generation quantity of a wind power generator may be reduced, for example due to the presence of ice or other factors. The generation quantity is individually controlled such that the generation quantity can be increased in such a case. Document D1 suggests a de-icing method and document D2 considers the correction of a blade pitch and other modifications may be implemented by a controller to address a poor turbine performance. However, environmental conditions are not considered for the control. Document D3 discloses that an accumulation or buildup of foreign matter on a surface of a wind turbine rotor blade may negatively impact the performance of the wind turbine.

### SUMMARY

The object of the present invention is hence to provide a method of controlling a generation quantity of a wind power plant such that a reduction of a generation quantity of the wind power plant due to a wind power generator thereof having a reduced generation quantity can be avoided. This object is solved by claim 1 and further advantageous embodiments and improvements of the invention are listed in the dependent claims. Whilst hereinafter the embodiments of the invention will be described in detail with reference to the attached drawings, hereinafter some general aspects which contribute to the understanding of the invention are described. One aspect of the present disclosure relates to improving a generation quantity by analyzing the reduction factor of the generation quantity if the generation quantity is reduced in a plurality of wind power generators installed in a wind power plant and improving a generation quantity by forming a generation quantity reduction pattern due to the lapse of a period if a total generation quantity of a wind power plant is reduced and using the patterned generation quantity reduction pattern in controlling the generation quantity.

In another aspect, a method of controlling the generation quantity of a wind power plant includes monitoring a generation state of the wind power plant comprising a plurality of wind power generators, analyzing a generation quantity reduction factor of a wind power generator that has a reduced generation quantity and that belongs to the plurality of wind power generators if the generation quantity of the wind power generator is reduced, and individually controlling the generation quantity of the wind power generator having the reduced generation quantity based on the analyzed reduction factor so that the generation quantity is increased.

Monitoring the generation state of the wind power plant includes receiving current weather information about an area where the wind power plant is placed and weather information after an n time and monitoring a generation quantity of the wind power plant by periods based on the received weather information.

Checking whether or not contaminants have been attached to a blade of the wind power generator includes partitioning the wind power plant into a plurality of zones and comparing attachment degrees of the contaminants in the partitioned zones with each other.

Checking whether or not a rotational velocity of the blade has been reduced, whether or not vibration has been generated in the blade, and whether or not a weight of the blade has been increased, and checking weather conditions around the wind power plant again.

Analyzing the generation quantity reduction factor comprises selectively using a method of detecting a reduction of the generation quantity of the wind power generator using a first sensor installed in each of the wind power generators and a method of partitioning the wind power plant into zones and detecting a reduction of the generation quantity of the wind power generator using a second sensor installed in a representative wind power generator of each of the partitioned zones.

Checking whether or not contaminants have been attached to the blade of the wind power generator includes checking a size and area of dust attached to the blade if the contaminants attached to the blade are the dust.

Checking the weather conditions around the wind power plant again includes checking a wind velocity and a wind volume around the wind power generator having the reduced generation quantity.

Individually controlling the generation quantity of the wind power generator includes changing a surface roughness of a blade of the wind power generator having the reduced generation quantity and computing lifting force and drag force again, applying the re-computed lifting force and drag force to the wind power generator having the reduced generation quantity and controlling a tilt angle of the blade of the wind power generator having the reduced generation quantity.

Individually controlling the generation quantity of the wind power generator includes rotating a blade of the wind power generator having the reduced generation quantity by increasing output of the wind power generator.

In another aspect, a method of controlling a generation quantity of a wind power plant, includes monitoring a generation state of the wind power plant according to a lapse of a period after the wind power plant is driven, subdividing and patterning a generation quantity reduction pattern of wind power generators having reduced generation quantities by periods if the generation quantity of the wind power plant is reduced entirely or partially and controlling the generation quantity of the wind power plant based on the generation quantity reduction pattern so that the generation quantity is increased.

Monitoring the generation state of the wind power plant comprises monitoring the generation state of the wind power plant according to a lapse of daily, monthly, and yearly periods in an area where the wind power plant is placed.

Subdividing and patterning the generation quantity reduction pattern includes subdividing whether or not contaminants have been attached to blades of the wind power generators placed in the wind power plant according to zones of the wind power generators placed in the wind power plant, checking contaminant attachment states of the blades according to specific periods after contaminants attached to the blades are fully removed and checking and recording a change of the contaminants.

Controlling the generation quantity of the wind power plant comprises controlling tilt angles of blades of the wind power generators having the reduced generation quantities differently by periods.

Controlling the generation quantity of the wind power plant includes controlling amount of current applied to rotors of the wind power generators having the reduced generation quantities differently by periods.

Controlling the tilt angles of the blades differently by periods includes controlling the blades at a first tilt angle after a lapse of a first period, controlling the blades at a second tilt angle after a lapse of a second period and controlling the blades at a third tilt angle after a lapse of a third period.

The tilt angle of the blade is increased from the first tilt angle to the third tilt angle.

### BRIEF DESCRIPTION OF THE DRAWINGS

The above and other aspects, features, embodiments and other advantages will be more clearly understood from the following detailed description taken in conjunction with the accompanying drawings, in which:
FIG. 1 is a diagram showing a control unit configured to perform a method of controlling the generation quantity of a wind power plant and elements associated with the control unit in accordance with an embodiment of the present invention;
FIG. 2 is a general flowchart illustrating a method of controlling the generation quantity of a wind power plant in accordance with an embodiment of the present invention;
FIG. 3 is a perspective view schematically showing a wind power plant in accordance with an embodiment of the present invention;
FIG. 4 is a flowchart illustrating a detailed method of controlling the generation quantity of a wind power plant in order to monitor the generation state in accordance with an embodiment of the present invention;
FIG. 5 is a flowchart illustrating a detailed method of controlling the generation quantity of a wind power plant regarding generation quantity reduction factor in accordance with an embodiment of the present invention;
FIG. 6 is a flowchart illustrating a detailed method of controlling the generation quantity of a wind power plant in order to individually control a generation quantity in accordance with an embodiment of the present invention;
FIG. 7 is a general flowchart illustrating a method of controlling the generation quantity of a wind power plant in accordance with another non-claimed embodiment of the present invention;
FIG. 8 is a perspective view schematically showing a wind power plant in accordance with another non-claimed embodiment of the present invention;
FIGS. 9 and 10 are a flowchart and diagram illustrating a method of controlling the generation quantity of a wind power plant in order to control the operation state in accordance with an embodiment of the present invention; and
FIGS. 11 and 12 are flowcharts illustrating a method of controlling the generation quantity of a wind power plant in order to control the operation state in accordance with another non-claimed embodiment of the present invention.

### DESCRIPTION OF SPECIFIC EMBODIMENTS

Hereinafter, embodiments of the present invention will be described with reference to the accompanying drawings.

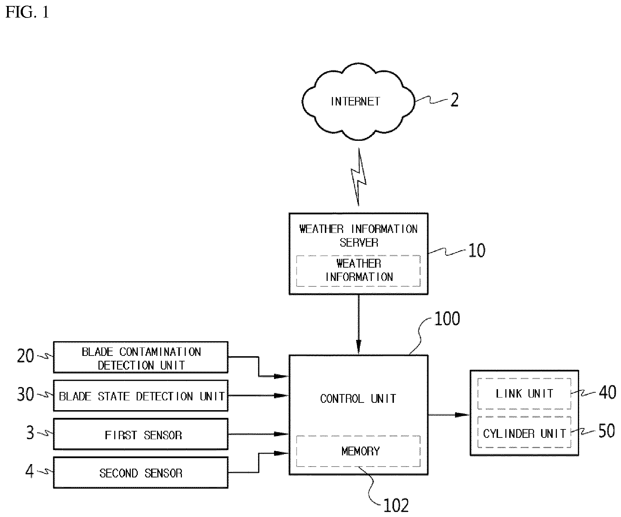

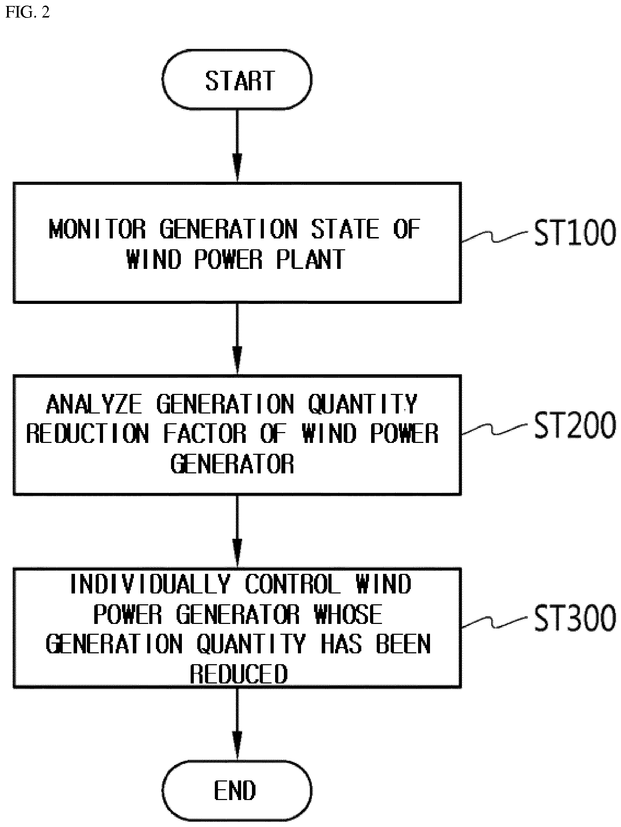

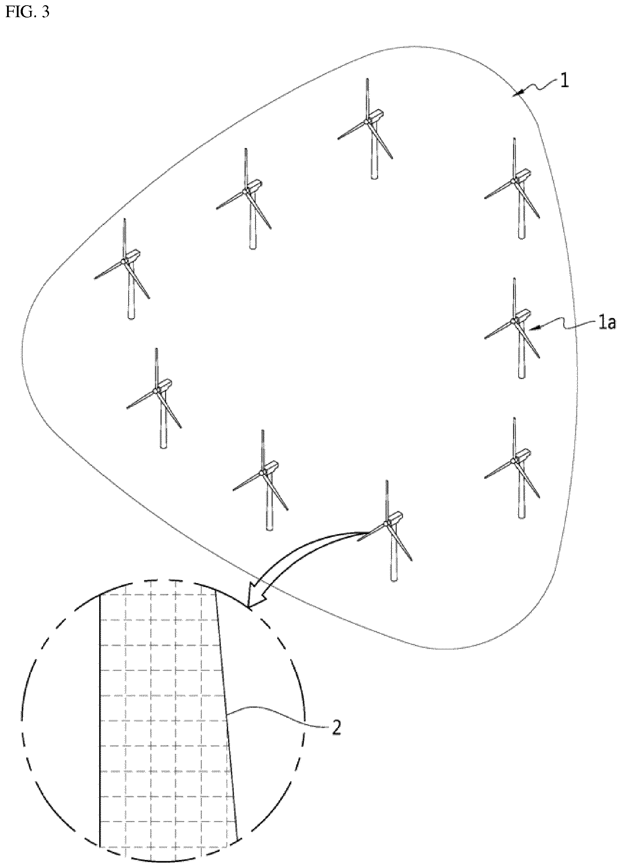

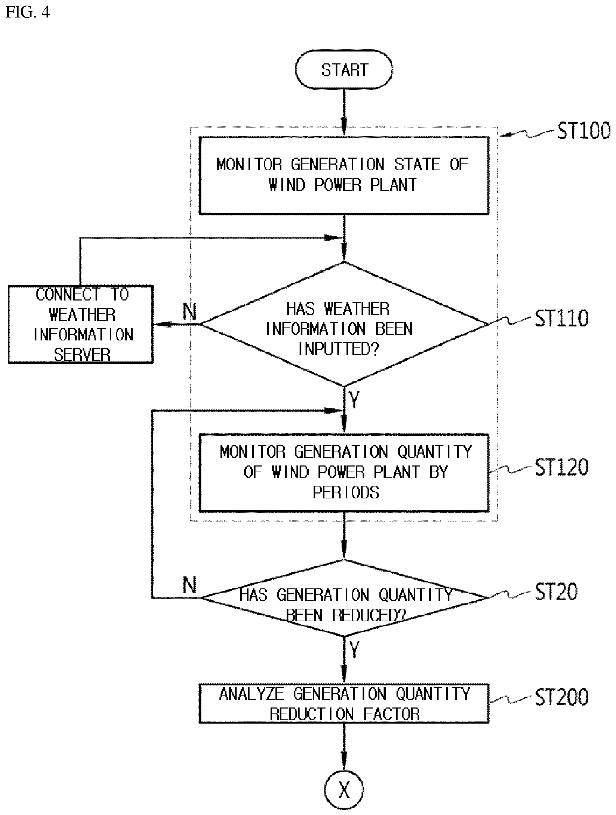

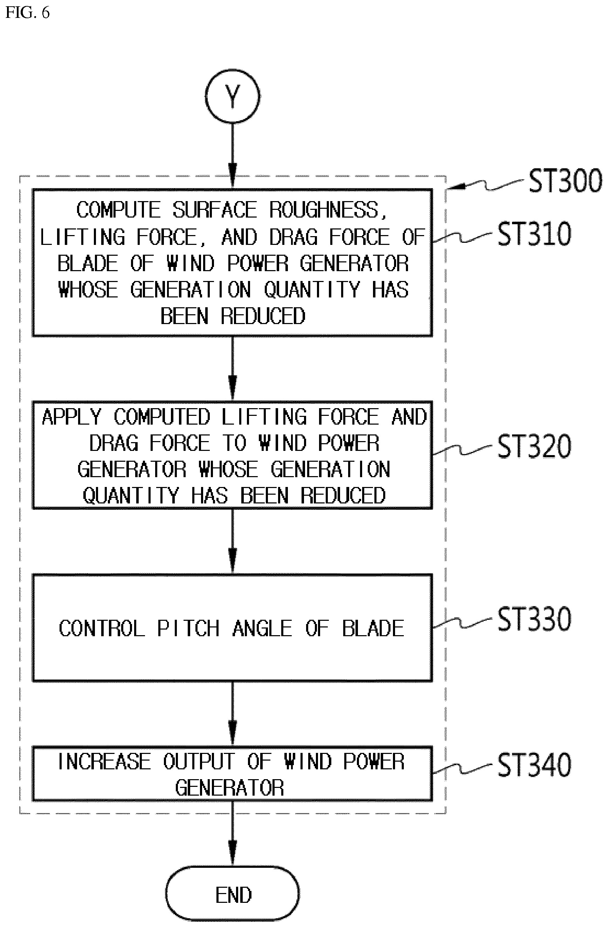

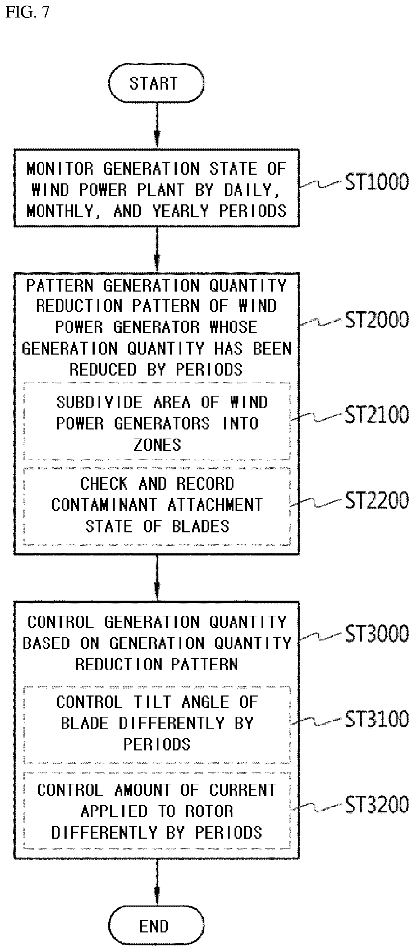

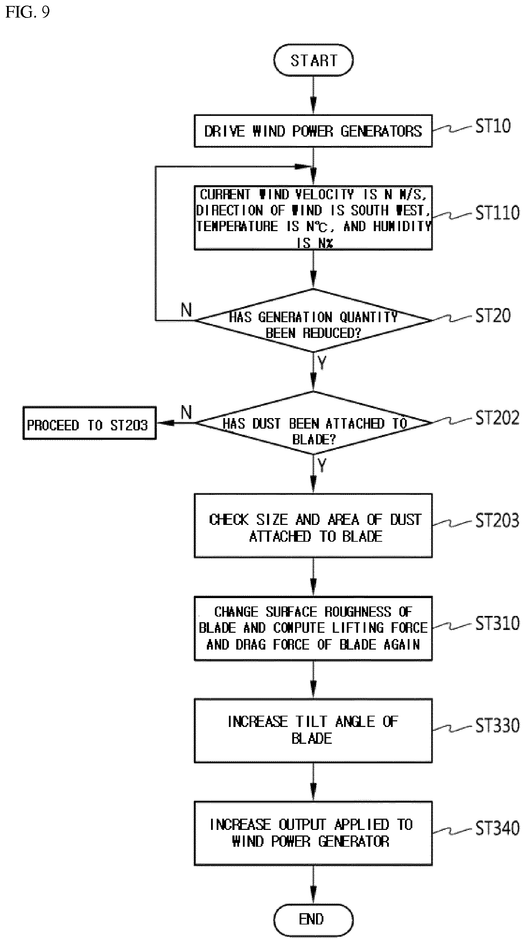

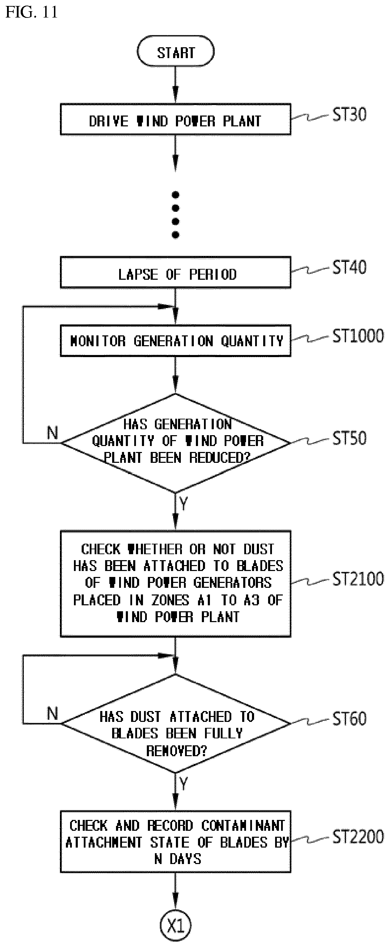

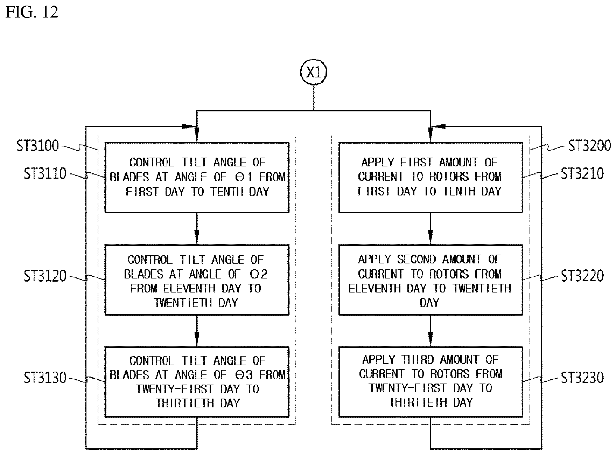

It should, however, be noted that in the description of FIGs. 1-12 in the present disclosure, FIGs. 1-12 are described to all belong to embodiments of the invention. However, the invention as claimed is covered by its embodiments relating to FIGs. 1-6, FIG. 9 and FIG. 10 and their description whilst the embodiments in FIG. 7, 8, 11 and 12 should be understood as "examples" contributing to the understanding of the invention but not relating directly to the invention as claimed.

A method of controlling the generation quantity of a wind power plant in accordance with an embodiment of the present invention is described below with reference to FIGS. 1 to 4.

Referring to FIGS. 1 to 4, a method of controlling the generation quantity of a wind power plant according to an embodiment of the present invention includes controlling a generation quantity based on the generation state of the entire wind power plant installed on the land or the sea and configured to include a plurality of wind power generators, analyzing generation quantity reduction factor in order to improve generation performance if the generation quantity of each wind power generator or the wind power plant is reduced, and individually controlling the generation quantity of each wind power generator having a reduced generation quantity based on the analyzed data.

More particularly, the method of controlling the generation quantity of a wind power plant according to the present embodiment includes monitoring the generation state of a wind power plant 1 including a plurality of wind power generators 1a at step ST100, analyzing the generation quantity reduction factor of a specific wind power generator 1a that belongs to the plurality of wind power generators 1a and has a reduced generation quantity if the generation quantity of the specific wind power generator 1a is reduced at step ST200, and individually controlling the generation quantity of the specific wind power generator 1a having the reduced generation quantity based on the analyzed reduction factor so that the generation quantity of the specific wind power generator 1a is increased at step ST300.

In order to monitor the generation state of the wind power plant 1, a weather information server 10 sends weather information to a control unit 100 configured to integrally control the wind power plant 1 in real time. The control unit 100 stores the received weather information as information for controlling the generation quantity of the wind power plant 1.

The weather information server 10 receives weather information in real time over the Internet 2 configured in the wind power plant 1 and provides the weather information to an administrator. The weather information includes weather data, such as the temperature, humidity, direction of the wind, and wind velocity of an area where the wind power plant 1 is installed.

In particular, major data related to the generation quantity of the wind power plant 1 includes weather data, such as the direction of the wind and a wind velocity. The weather information is stored in memory 102.

As described above, the control unit 100 receives weather information after an 'n' time along with current weather information of an area where the wind power plant 1 is installed at step ST110 and monitors the generation quantity of the wind power plant 1 by periods in real time based on the received weather information at step ST120.

The control unit 100 receives current weather information, provides an administrator with weather condition information around the wind power plant 1 in which the plurality of wind power generators 1a is installed, and calculates the mean by monitoring the generation state by time and by period.

In accordance with an embodiment for monitoring the generation state of the wind power plant 1 at step ST100, the wind power plant 1 may be partitioned into a plurality of zones, and the generation state of each of the partitioned zones is classified into years, months, and weeks and is monitored at daytime and night.

For example, if the wind power plant 1 has a relatively large area, the wind power generators 1a are disposed at relatively great intervals. The generation state of the wind power generators 1a may be changed depending on the disposed intervals, weather conditions, and surrounding environments.

In the present embodiment, in order to monitor the generation state more precisely, the generation state is monitored by dividing one year into months, each of the months into weeks, each day of the week into daytime and night. Accordingly, the reliability of monitoring data obtained according to the generation state of the wind power plant 1 can be improved because monitoring according to a change of a season or a lapse of a period can be performed more precisely.

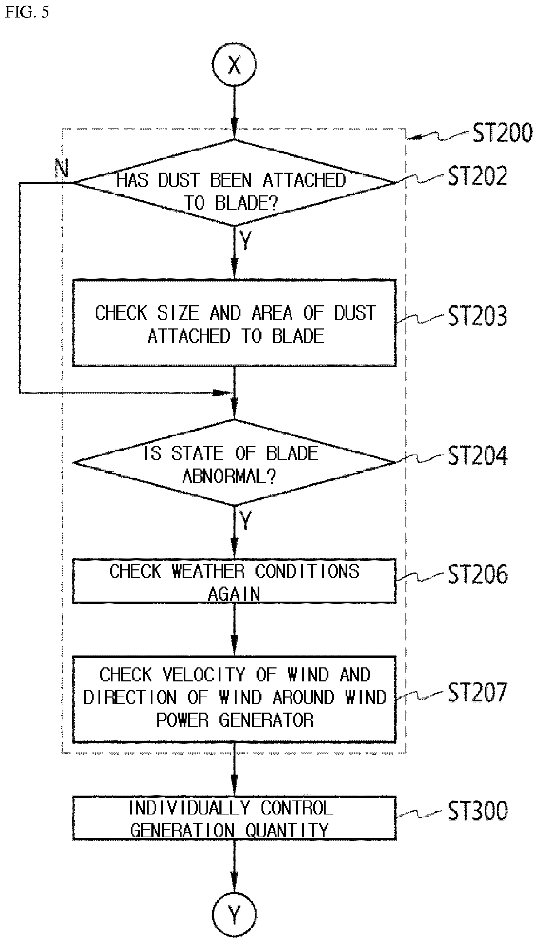

Referring to FIG. 1 or 5, if the generation quantity of any one of the plurality of wind power generators 1a installed in the wind power plant 1 is reduced, the control unit 100 analyzes the generation quantity reduction factor of the wind power generator 1a having a reduced generation quantity at step ST200.

The generation quantity reduction factor includes a reduction in a generation quantity attributable to external factors other than the mechanical defect or malfunction of the wind power generator 1a if the wind power generator 1a has a generation quantity smaller than that in the normal state.

For example, whether or not contaminants have been attached to the blade of the wind power generator 1a is first checked at step ST202. The blade is a core element for designing and interpreting the wind power generator 1a. The generation state of the wind power generator 1a may be changed by the rotation area of the blade. If contaminants (e.g., dust, insects, or dead birds) are attached to the blade, the rotational velocity of the blade may be changed and design data applied to the blade when the blade was initially designed may be changed, thereby being capable of reducing the generation quantity of the wind power generator 1a.

In order to check whether or not contaminants have been attached to the blade of the wind power generator 1a, for example, the wind power plant 1 may be partitioned into a plurality of zones and the attachment degrees of contaminants may be compared with each other in each of the partitioned zones. In such a case, a different contamination state may be checked in each of the partitioned zones. If the contamination state of the wind power generators 1a in a specific zone is different from that of the wind power generators 1a in an adjacent zone, a zone where contaminants have occurred is determined to be a contamination generation zone.

In particular, if the wind power plant 1 is installed in a dry climate area, such as the desert, or an area where yellow dust and sandstorm are frequently generated, a relatively large amount of contaminants may be attached to the blade. Accordingly, whether or not contaminants have been attached to the blade is first checked.

In order to check whether or not contaminants have been attached to the blade at step ST202, a blade contamination detection unit 20 detects the contamination state of the blade and sends detected information to the control unit 100 because it is practically difficult for an administrator or a worker to check the plurality of wind power generators 1a one by one.

A camera unit may be used as the blade contamination detection unit 20. The camera unit is placed at a location spaced apart from the front of the wind power generator 1a at a specific interval and is configured to capture an image regarding whether or not contaminants have been attached to the blade in real time and to send the image to the control unit 100. The camera unit may include an infrared camera for precisely monitoring the contamination state of the blade even at night in order to check whether or not contaminants have been attached to the blade precisely.

The camera unit may include a tilting unit (not shown) disposed on the lower side of the camera unit and tilted at a specific angle in order to photograph the contamination state of a blade of the wind power generator.

For example, if the contaminants attached to the blade are dust, the camera unit checks the size and area of the dust attached to the blade at step ST203. The size and area of the dust may be computed by defining the area of each blade as grids of a lattice form, each having a constant size in both the x direction and the y direction, and computing the size and area of the dust in each of the defined grids using the control unit 100.

If it is determined that contaminants have not been attached to the blade, the control unit 100 checks whether or not of the rotational velocity of the blade has been reduced, whether or not vibration has been generated in the blade, and whether or not the weight of the blade has been increased through a blade state detection unit 30 at step ST204.

The blade state detection unit 30 includes a rotor speed detection sensor (not shown) configured to detect the rotational velocity of the rotor. The rotor speed detection sensor detects the rotational velocity of the rotor and sends the detected rotational velocity to the control unit 100. The control unit 100 compares the rotational velocity of the rotor with a reference rotational velocity and checks whether or not the current rotational velocity of the rotor is in a normal state based on a result of the comparison.

A vibration detection sensor (not shown) detects whether or not vibration has been generated in the blade while the rotor including the blade is rotated. The control unit 100 receives a detection signal detected by the vibration detection sensor and determines whether or not vibration has been generated in the blade.

If it is determined that vibration is generated in the blade, the rotor may be rotated unstably and thus a generation quantity may be reduced. The control unit 100 determines that such an unstable state corresponds to a generation quantity reduction factor. Furthermore, a weight detection sensor (not shown) installed in the blade detects whether or not the weight of the blade has been increased and sends a detection signal to the control unit 100. The control unit 100 determines whether or not the weight of the blade has been increased based on the detection signal.

The weight of the blade may be relatively decreased, for example, when insects or birds attached to the blade are rotated along with the blade because the insects or birds do not drop to the ground after the insects or birds collide against the blade. The weight of the blade may be reduced in other cases.

The control unit 100 checks weather conditions around the wind power plant 1 again at step ST206 and checks the velocity of the wind toward the wind power plant 1 and information about the direction of the wind through the weather information server 10 again at step ST207.

For example, if weather conditions around the wind power plant 1 are suddenly changed, the generation quantity of the wind power generator 1a may be reduced. If the velocity of the wind toward the wind power generator 1a remains 10 m/s and sharply drops to 5 m/s, the rotational velocity of the rotor may be relatively decreased. In such a case, a generation quantity reduction factor that reduces the generation quantity of the wind power generator 1a is determined to result from weather conditions around the wind power plant 1.

In the method of controlling the generation quantity of a wind power plant 1 according to the present embodiment, in order to analyze the generation quantity reduction factor at step ST200, a first sensor 3 configured to detect a reduction of a generation quantity of the wind power generator 1a may be installed in each of the wind power generators 1a. In other embodiments, the wind power plant 1 may be partitioned into zones, and a second sensor 4 may be installed only in a representative one of the wind power generators disposed in each of the partitioned zones. A generation quantity reduction factor is analyzed through the first and the second sensors 3 and 4.

It is difficult for an administrator or a worker to directly check the operation state of the plurality of wind power generators 1a because the wind power plant 1 occupies a very wide area. Accordingly, the first sensors 3 may be installed in all the wind power generators 1a. The control unit 100 may receive detection signals detected by the respective first sensors 3, and may check a precise location of a wind power generator 1a whose generation quantity has been reduced and a reduction of a generation quantity of the wind power generator 1a.

The first sensor 3 may include a dust detector configured to check the state of dust that is accumulated on the blade of the wind power generator 1a. The control unit 100 receives dust detection data detected by the dust detector and determines the contamination state around the wind power generator 1a based on the dust detection data.

In the wind power plant 1 according to the present embodiment, the plurality of wind power generators 1a may be partitioned into multiple zones and control may be performed on each of the zones. In such a case, the second sensor 4 may be installed in a representative wind power generator that represents a specific zone, and may detect a reduction of a generation quantity of the zone and provide the detected generation quantity reduction state to the control unit 100.

After the generation quantity reduction factor of each wind power generator is analyzed as described above, the wind power generator 1a whose generation quantity has been reduced is individually controlled in order to increase the generation quantity of the wind power generator 1a at step ST300.

Referring to FIGS. 1, 3, and 6, if dust is attached to the blade and the generation quantity of the wind power generator 1a is reduced, the surface roughness of a blade of the wind power generator 1a is changed differently from an initially set surface roughness, and the lifting force and drag force of the blade are computed again at step ST310.

If a quantity of dust is accumulated on a surface of the blade, pressure applied to the surface of the blade is increased because a flow distribution of air moving along the surface of the blade relatively becomes more irregular than that prior to the accumulation of the dust. Furthermore, a fatigue load at a specific portion of the blade may be increased because the flow of air moving along the surface of the blade is suddenly changed in a turbulent flow form. As a result, the structural strength of the blade may be weakened.

In accordance with an embodiment of the present invention, in order to prevent the structural strength of the blade from being weakened as described above and also maintain the stable generation quantity of the wind power generator 1a, the control unit 100 computes lifting force and drag force again S310 and applies the computed lifting force and drag force to the wind power generator 1a whose generation quantity has been reduced again at step ST320. Furthermore, the control unit 100 performs pitch control on the blade of the wind power generator 1a whose generation quantity has been reduced so that the generation quantity is no longer reduced. In such pitch control, the control unit 100 controls the pitch angle of the blade so that aerodynamic performance is more improved than that prior to the attachment of contaminants at step ST330.

The control unit 100 uses one of an automatic method and a manual method in order to control the tilt angle of the blade. If the automatic method is used, the control unit 100 controls the tilt angle of the blade using a link unit 40 or a cylinder unit 50 that is driven by hydraulic pressure.

The control unit 100 according to the present embodiment may control each of the tile angles of N blades installed in the rotors or control the tile angles of N blades installed in the rotors at a specific angle at the same time. For example, if first to N-th blades are individually controlled, the generation quantity of the wind power generator 1a may be increased irrespective of whether or not contaminants have been attached to each blade by controlling the tilt angles of the blade with consideration taken of the contamination state of each of the blade.

In accordance with the present embodiment, when controlling the generation quantity of each of the wind power generators 1a, the control unit 100 may rotate the blade of the wind power generator 1a whose generation quantity has been reduced by increasing the output of the wind power generator 1a at step ST340. In such a case, the rotational velocity of the blade can be improved and thus the generation quantity of the wind power generator 1a can be increased because more current than that before contaminants are attached to the blade of the wind power generator 1a is applied to a motor (not shown).

In individually controlling the generation quantities of the wind power generators 1a at step ST300, the wind power generator 1a whose generation quantity has been reduced is controlled by increasing the rotational velocity of the wind power generator 1a. If the generation state of an adjacent wind power generator 1a remains in a reference generation quantity over time, the rotational velocity of the wind power generator whose rotational velocity has been increased is controlled in a normal rotational velocity. In such a case, unnecessary power consumption can be minimized, power generation efficiency of the wind power generator can be maintained stably, and thus efficiency of the entire wind power plant 1 can be improved.

A method of controlling the generation quantity of a wind power plant in accordance with another non-claimed embodiment of the present invention is described below with reference to FIGS. 1, 7, and 8.

Referring to FIGS. 1, 7, and 8, unlike in the aforementioned embodiment, in the method of controlling the generation quantity of a wind power plant according to the present embodiment, the wind power plant 1 is controlled based on a generation quantity reduction pattern of the wind power plant 1 so that the generation quantity of the wind power plant 1 is increased. For reference, the wind power plant 1 according to the present embodiment is assumed to be installed in a dry climate area including a lot of sand and dust.

More particularly, after the wind power plant 1 is driven, the generation state of the wind power plant 1 by daily, monthly, and yearly periods is monitored in an area where the wind power plant 1 is placed at step ST1000. If the generation quantity of the wind power plant 1 is reduced entirely or partially, a generation quantity reduction pattern of a wind power generator 1a whose generation quantity has been reduced is subdivided and patternized by periods at step ST2000. The generation quantity of the wind power plant 1 is controlled based on the patterned generation quantity reduction pattern so that the generation quantity is increased at step ST3000.

In general, the generation state of the wind power plant 1 including the plurality of wind power generators 1a is relatively more reduced than that when the wind power plant 1 is first driven over time. The reason why the generation quantity of the wind power plant 1 is reduced as described above may be various. In the present embodiment, the reason why the generation quantity of the wind power plant 1 is reduced results in a location where the wind power plant 1 is placed.

For example, if the wind power plant 1 is placed in a dry climate area, including a lot of sand and dust, or near the desert, a quantity of dust and alien substances are introduced into the wind power plant 1. A change of the generation quantity of the wind power plant 1 is monitored over time under such conditions.

If the generation quantity of the wind power plant 1 is reduced over time, a generation quantity reduction pattern is subdivided into periods at step ST2000. In this case, whether or not contaminants have been attached to the blades of the wind power generators 1a installed in the wind power plant 1 is subdivided and checked based on the zones of the wind power generators 1a installed in the wind power plant 1.

For example, the wind power plant 1 may include a plurality of the wind power generators 1a and the plurality of wind power generator 1a may be placed in zones A1 to A3.

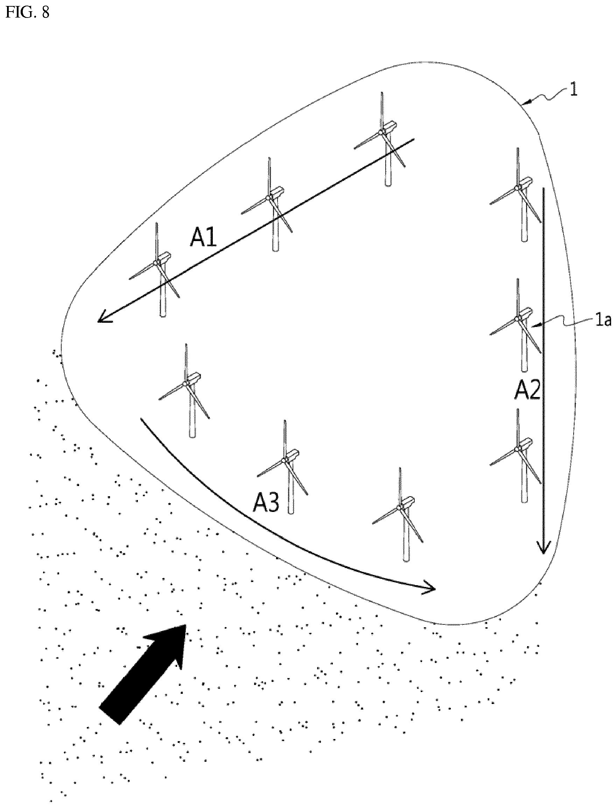

For reference, it is to be noted that the zones of the wind power generators 1a have been provided only for easy of understanding and are not limited to an example of FIG. 8.

First, a plurality of the wind power generators 1a disposed in the zone A1 and a plurality of the wind power generators 1a placed in the zone A3 are disposed at different zones although they are installed in the same wind power plant 1. Accordingly, a generation quantity and the degree of attached contaminants may be different between the plurality of wind power generators 1a disposed in the zone A1 and the plurality of wind power generators 1a disposed in the zone A3.

That is, a reduction in the generation quantities of the wind power generators 1a or the generation quantity of the wind power plant 1 is checked in the state in which the area of the plurality of wind power generators 1a have been subdivided into the zones A1 to A3 at step ST2100.

Next, after fully removing dust, that is, contaminants attached to the blades, the contaminant attachment state of the blades is checked according to a specific period, and a change of the contaminants is checked and recorded at step ST2200.

For example, if a quantity of sandstorm is blown in the direction of a thick arrow in FIG. 8, a quantity of dust may be attached to the blades of the plurality of wind power generators 1a placed in the zone A3. In such a case, the dust, that is, contaminants, is fully removed by cleaning the blades of the wind power generators 1a placed in the zone A3. Furthermore, the state of dust attached to the blades of the wind power generators 1a placed in the zone A3 and the extension state of size and area of the attached dust are stored in the control unit 100 and digitized every 10 days or higher.

The contaminants attached to the blades may be directly removed by workers manually, or may be removed using a contaminant removing unit (not shown) capable of automatically removing the contaminants attached to the blades.

As described above, a change of the contaminants may be computed by defining the area of each blade as grids of a lattice form, each having a specific size in the x direction and the y direction, and computing the size and area of each of the defined grids through the control unit 100. Accordingly, when dust is attached to the blade, the size and area of the dust attached to the blade can be computed.

Accordingly, when the state of contaminants attached to the blade and a change of the contaminants attached to the blade are monitored at a specific interval, a specific pattern characteristic regarding the size and area of the contaminants is recorded on the memory 102 of the control unit 100 according to each of the wind power generators 1a or each of the zones A1 to A3 in the form of a contamination state by periods.

In such a case, the state of contaminants attached to the blades and a change of the contaminants attached to the blades are different between the plurality of wind power generators 1a placed in the zone A1 and the wind power generators 1a placed in the zones A2 and A3. The control unit 100 numerically digitizes and stores a change of the contaminants attached to the wind power generator 1a placed in the zones A1 to the zone A3.

The control unit 100 subdivides and stores a reduction of a generation quantity according to the date along with a change of contaminants by periods and also patternizes and stores a reduction of the generation quantity along with the change of the contaminants. Accordingly, a reduction of the generation quantity according to the attachments of the contaminants can be checked in the form of a graph.

For reference, as in the aforementioned embodiment, the blade contamination detection unit 20 (refer to FIG. 1) may check whether or not contaminants have been attached to the blade of the wind power generator 1a. A camera unit is used as the blade contamination detection unit 20. The camera unit is installed at a location spaced apart from the front of the wind power generator 1a at a specific interval and is configured to detect whether or not contaminants have been attached to the blade of the wind power generator 1a in real time and to send a detection signal to the control unit 100. A tilting unit (not shown) is disposed on the lower side of the camera unit and is rotated toward the wind power generator 1a at a specific angle.

The control unit 100 controls the generation quantity of the wind power generator 1a based on a generation quantity patternized as described above so that the generation quantity is increased. In the present embodiment, the control unit 100 may control the tilt angle of a blade of the wind power generator 1a whose generation quantity has been reduced differently by periods at step ST3100, may control the amount of current applied to the rotor of the wind power generator 1a whose generation quantity has been reduced differently by periods at step ST3200.

For reference, in the present embodiment, the tilt angle of the blade has been illustrated as being controlled, but it is to be noted that any method capable of improving the generation quantity of the wind power generator 1a whose generation quantity has been reduced or the wind power plant 1 may be used. Furthermore, in such a case, the basic method of controlling the generation quantity of the wind power generator 1a whose generation quantity has been reduced or the wind power plant 1 differently by periods needs to be used.

In controlling the generation quantity at step ST3000, the control unit 100 controls the generation quantity in conjunction with yearly weather information about an area where the wind power plant 1 is installed. The weather information includes wind velocity information, temperature information, and humidity information. Control is performed based on the weather information so that power generation efficiency of each of the plurality of wind power generators 1a placed in the wind power plant 1 is improved.

In accordance with the present embodiment, in order to control the tilt angle of a blade of the wind power generator 1a differently by periods, the blade the wind power generator 1a may be sequentially controlled at a first tilt angle after a lapse of a first period, at a second tilt angle after a lapse of a second period, and at a third tilt angle after a lapse of a third period.

Assuming that each of the first period, the second period, and the third period is 10 days, the control unit 100 performs pitch control on the tilt angle of the blade. It is however to be noted that the period may be changed by taking a location where the wind power plant 1 is placed into consideration and is not necessarily limited to 10 days.

Furthermore, the control unit 100 may control the first tilt angle, the second tilt angle, and the third tilt angle differently. In the present embodiment, the size may be increased from the first tilt angle to the third tilt angle. For example, the first tilt angle may remain in an initially set state without changing the tilt angle of the blade, the second tilt angle may be a change of 5 degrees from the initially set state, and the third tilt angle may be a change of 10 degrees from the initially set state.

Furthermore, in the present embodiment, the control unit 100 may perform control according to the contamination of the blade by differently controlling the rotational velocity of the rotor in addition to the tilt angle of the blade or differently applying the amount of current to the motor.

The control unit 100 patternizes a reduction of the generation quantity of the wind power plant 1 according to a specific period after the wind power plant 1 is first driven as described above and uses the patternized generation quantity reduction state as a parameter for improving the generation quantity of the wind power plant 1.

A method of controlling the generation quantity of the wind power plant 1 in order to control the state in accordance with an embodiment of the present invention is described below with reference to FIGS. 1 and 9 to 10.

Referring to FIGS. 1 and 9 to 10, when the plurality of wind power generators 1a installed in the wind power plant 1 is driven at step ST10, the control unit 100 receives weather information, including a wind velocity, the direction of the wind, a temperature, and humidity around the wind power plant 1, from the weather information server 10 and provides the weather information to an administrator at step ST110.

The control unit 100 monitors weather conditions around the wind power plant 1 and at the same time checks whether or not the generation quantity of the wind power plant 1 is generated. If, as a result of the determination, a quantity of sandstorm or yellow dust is blown toward the wind power plant 1, the control unit 100 monitors weather conditions more carefully because the generation quantity of the wind power generator 1a may be changed.

If, as a result of the determination, it is determined that the generation quantity of a specific wind power generator 1a has been reduced due to changes in the weather at step ST20, the control unit 100 checks whether or not dust has been attached to the blade of the wind power generator 1a whose generation quantity has been reduced through the blade contamination detection unit 20 at step ST202.

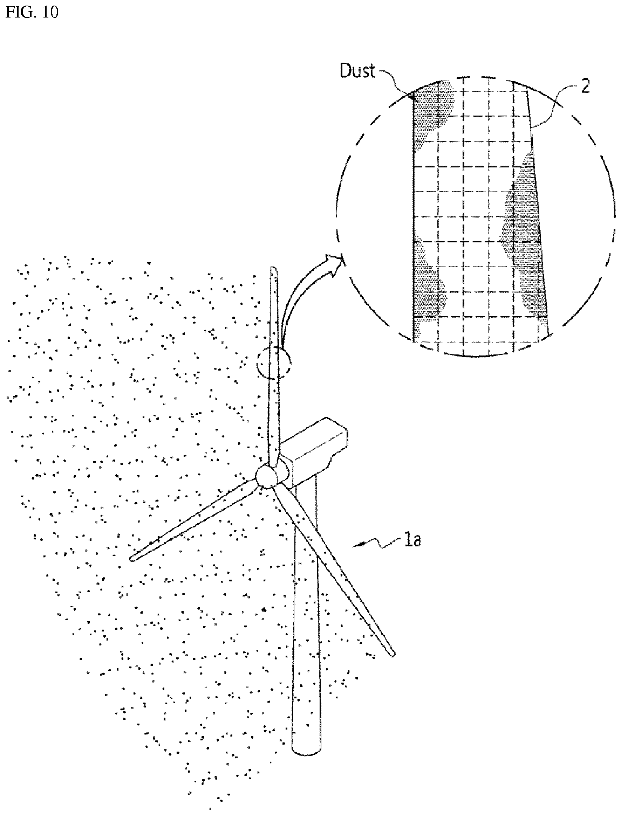

For example, as shown in an enlarged view of FIG. 10, if dust has been attached to the blade 2 of the wind power generator 1a, the control unit 100 checks data regarding the size and area of the dust. The area of the blade 2 is partitioned into grids of a lattice form whose outer circumferential surface has the same size. Accordingly, when dust is attached to the blade 2, the control unit 100 may numerically compute the size and area of the dust. An administrator checks the computed size and area of the dust at step ST203 and controls the wind power generator 1a whose generation quantity has been reduced through the control unit 100.

The control unit 100 changes the surface roughness of the blade 2 based on the computed size and area of the dust, computes lifting force and drag force again for the smoother rotation of the blade 2 at step ST310, and applies the computed lifting force and drag force the wind power generator 1a whose generation quantity has been reduced.

The lifting force and drag force of the wind power generator 1a that has been contaminated are changed as compared with those of the wind power generator 1a to the blade 2 of which the dust is not attached, and thus the rotor of the wind power generator 1a is rotated by the changed lifting force and drag force. For a more smooth rotation, the control unit 100 performs control by increasing a pitch angle so that the tilt angle of the blade 2 is increased at step ST330.

The control unit 100 checks a change of the generation quantity of the wind power generator 1a and controls the generation quantity of the wind power generator 1a whose generation quantity has been reduced so that output applied to the wind power generator 1a is increased.

A method of controlling the generation quantity of the wind power plant 1 in order to control the state in accordance with another non-claimed embodiment of the present invention is described below with reference to FIGS. 1, 8, and 11 to 12.

Referring to FIGS. 1, 8, and 11 to 12, after a lapse of one year or several years at step ST40 since the wind power plant 1 is driven at step ST30, the generation quantity of the wind power plant 1 may be changed. The generation quantity of the wind power plant 1 is monitored according to the lapse of a period at step ST1000. The generation state of the wind power plant 1 is monitored daily, monthly, and yearly and is stored in the memory 102 of the control unit 100.

If the generation quantity of the wind power plant 1 that is monitored as described above is reduced at step ST50, the control unit 100 checks whether or not dust has been attached to the blades of the plurality of wind power generators 1a placed in the zones A1 to A3 of the wind power plant 1 every 10 days through the blade contamination detection unit 20 in order to patternize a generation quantity reduction pattern at step ST2100. If, as a result of the check, it is determined that dust has been attached to the blades of a plurality of the wind power generators 1a, the dust attached to the blades are fully removed at step ST60.

Furthermore, the control unit 100 determines whether or not dust is attached to the blades every 10 days and determines whether the surfaces of the blades are contaminated with what size and area during the 10 days if, as a result of the determination, dust is attached to the blades based on a detection signal provided by the blade contamination detection unit 20.

If the blades to which the dust has been attached are rotated and the degree of contamination on the surfaces of the blades is increased over time, the control unit 100 stores the degree of contamination as numerical data or image data according to the date. In this case, the control unit 100 also stores a reduction of the generation quantity of each of the wind power generators 1a or the entire wind power plant 1 according to the size and area of the dust based on the date and digitalizes and stores both the degree of contamination and the reduction of the generation quantity at step ST2200.

For example, the control unit 100 may digitalize and store the size and area of dust every day after the dust is first attached to the blade. A method of digitalizing the size and area of the dust has been described in connection with the aforementioned embodiments, and a detailed description thereof is omitted.

In order to control the generation quantity of the wind power plant 1 based on data stored as described above so that the generation quantity is increased, the control unit 100 may control the tilt angles of blades of the plurality of wind power generators 1a, placed at the location A3 including a reduced generation quantity, at an angle of θ1 from the first day to the tenth day, monitor and record a change of the generation quantity of the wind power plant 1 at step ST3110, control the tilt angles of blades of the plurality of wind power generators 1a at an angle of θ2 from the eleventh day to the twentieth day at step ST3120, control the tilt angles of blades of the plurality of wind power generators 1a at an angle of θ3 from the twenty-first day to the thirtieth day, monitor the generation quantity of the wind power plant 1 at step ST3130, and then check whether or not the generation quantity of the wind power plant 1 is increased.

In accordance with the present embodiment, the control unit 100 may increase the generation quantity of the wind power plant 1 by controlling the tilt angles of blades of the plurality of wind power generators 1a, placed at the location A3 including a reduced generation quantity, as described above. At the same time, the control unit 100 may apply a first amount of current to the rotors from the first day to the tenth day, monitor and record a change of the generation quantity of the wind power plant 1 at step ST3210, apply a second amount of current higher than the first amount of current to the rotors from the second day to the twentieth day, monitor and record a change of the generation quantity of the wind power plant 1 at step ST3220, apply a third amount of current higher than the second amount of current to the rotors from the twenty-first day to the thirtieth day, monitor and record a change of the generation quantity of the wind power plant 1 at step ST3230, and then check whether or not the generation quantity of the wind power plant 1 is increased.

The method of increasing the generation quantity of the wind power plant 1 according to the present embodiment may be combined and used with other methods along with the methods of controlling the tilt angles of the blades and the amount of currents applied to the rotors in order to increase the generation quantity of the wind power plant 1. In such a case, in order to increase the generation quantity of the wind power plant 1, the control unit 100 may monitor and record a change of the generation quantity by periods, and may control the generation quantity of the entire wind power plant 1 or each of the wind power generator 1a differently by periods.

In accordance with the embodiments of the present invention, power generation efficiency can be stably maintained through stable power generation irrespective of a lapse of a period using a generation quantity reduction pattern of the wind power plant according to the lapse of the period as a control parameter.

Furthermore, the generation quantity of a wind power plant can be increased by controlling each of wind power generators based on a factor that reduces the generation quantity if the generation quantity of the wind power generator is reduced.

The embodiments of the present invention have been disclosed above for illustrative purposes. Those skilled in the art will appreciate that various modifications, additions and substitutions are possible, without departing from the scope of the invention as disclosed in the accompanying claims.

## Claims

1. A method of controlling a generation quantity of a wind power plant (1), comprising:
a) monitoring (ST100) a generation state of the wind power plant comprising a plurality of wind power generators (1a), wherein said monitoring (ST100) the generation state of the wind power plant (1) comprises:
a1) receiving current weather information (10) about an area where the wind power plant (1) is placed and previous weather information; and
a2) monitoring a generation quantity of the wind power plant (1a) by periods based on the received weather information;
b) analyzing (ST200; 3) a generation quantity reduction factor of a wind power generator (1a) that has a reduced generation quantity and that belongs to the plurality of wind power generators if the generation quantity of the wind power generator (1a) is reduced to a smaller generation quantity than that in a normal state; and
c) individually (ST300) controlling the generation quantity of the wind power generator (1a) having the reduced generation quantity based on the analyzed reduction factor so that the generation quantity is increased; wherein
b1) said analyzing the generation quantity reduction factor step comprises checking (ST202; 20) whether or not contaminants have been attached to a blade of the wind power generator (1a) by partitioning the wind power plant into a plurality of zones and comparing attachment degrees of the contaminants in the partitioned zones with each other; and further comprising:
b2) checking (ST204), if it is determined that contaminants have not been attached to the blade, whether or not a rotational velocity of the blade has been reduced, whether or not vibration has been generated in the blade, and whether or not a weight of the blade has been increased; and
b3) checking (ST206) weather conditions around the wind power plant again.

2. The method of claim 1, wherein analyzing (ST200) the generation quantity reduction factor comprises selectively using a method of detecting a reduction of the generation quantity of the wind power generator (1a) using a first sensor (3) installed in each of the wind power generators (1) and a method of partitioning the wind power plant into zones and detecting a reduction of the generation quantity of the wind power generator using a second sensor (4) installed in a representative wind power generator (1) of each of the partitioned zones.

3. The method of claim 1, wherein in the checking (ST202) whether or not contaminants have been attached to the blade of the wind power generator (1) comprises checking a size and area of dust attached to the blade if the contaminants attached to the blade are the dust.

4. The method of claim 1, wherein step b3) checking the weather conditions around the wind power plant again comprises checking a wind velocity and a wind volume around the wind power generator (1a) having the reduced generation quantity.

5. The method of claim 1, wherein said individually controlling (ST300) of the generation quantity of the wind power generator (1a) in step c) comprises:
c1) when a surface roughness of a blade of the wind power generator (1a) having the reduced generation quantity has changed from an initially set surface roughness, computing lifting force and drag force again;
c2) applying (ST320) the re-computed lifting force and drag force to the wind power generator (1a) having the reduced generation quantity; and
c3) controlling a pitch angle of the blade of the wind power generator having the reduced generation quantity.

6. The method of claim 1, wherein said individually controlling (ST300) the generation quantity of the wind power generator (1a) comprises rotating a blade of the wind power generator having the reduced generation quantity by increasing output of the wind power generator.

## Patentansprüche

1. Verfahren zum Steuern einer Energieerzeugungsmenge einer Windkraftanlage (1), umfassend:
a) Überwachen (ST100) eines Energieerzeugungszustands der Windkraftanlage, die mehrere Windkraftgeneratoren (la) umfasst, wobei das Überwachen (ST100) des Energieerzeugungszustands der Windkraftanlage (1) umfasst:
a1) Empfangen aktueller Wetterinformationen (10) über ein Gebiet, in dem die Windkraftanlage (1) steht, und früherer Wetterinformationen; und
a2) Überwachen einer Energieerzeugungsmenge der Windkraftanlage (la) nach Zeiträumen auf Basis der empfangenen Wetterinformationen;
b) Analysieren (ST200; 3) eines Energieerzeugungsmengen-Reduzierungsfaktors eines Windkraftgenerators (la), der eine reduzierte Energieerzeugungsmenge aufweist und der zu den mehreren Windkraftgeneratoren gehört, wenn die Energieerzeugungsmenge des Windkraftgenerators (la) auf eine kleinere Energieerzeugungsmenge als die Energieerzeugungsmenge in einem Normalzustand reduziert ist; und
c) individuelles (ST300) Steuern der Energieerzeugungsmenge des Windkraftgenerators (1a), der die reduzierte Energieerzeugungsmenge aufweist, auf der Basis des analysierten Reduzierungsfaktors dergestalt, dass die Energieerzeugungsmenge erhöht wird; wobei
b1) der Schritt des Analysierens des Energieerzeugungsmengen-Reduzierungsfaktors das Überprüfen (ST202; 20) umfasst, ob sich Verunreinigungen an einem Flügel des Windkraftgenerators (la) angelagert haben oder nicht, indem die Windkraftanlage in mehrere Zonen unterteilt wird und Anlagerungsgrade der Verunreinigungen in den unterteilten Zonen miteinander verglichen werden; und
des Weiteren umfassend:
b2) Überprüfen (ST204), wenn festgestellt wird, dass sich keine Verunreinigungen an dem Flügel angelagert haben, ob eine Rotationsgeschwindigkeit des Flügels verringert wurde oder nicht, ob Vibrationen in dem Flügel erzeugt wurden oder nicht und ob ein Gewicht des Flügels erhöht wurde oder nicht; und
b3) erneutes Überprüfen (ST206) der Wetterbedingungen im Umfeld der Windkraftanlage.

2. Verfahren nach Anspruch 1, wobei das Analysieren (ST200) des Energieerzeugungsmengen-Reduzierungsfaktors das selektive Verwenden eines Verfahrens zum Detektieren einer Reduzierung der Energieerzeugungsmenge des Windkraftgenerators (la) unter Verwendung eines ersten Sensors (3), der in jedem der Windkraftgeneratoren (1) installiert ist, und eines Verfahrens zum Unterteilen der Windkraftanlage in Zonen und zum Detektieren einer Reduzierung der Energieerzeugungsmenge des Windkraftgenerators unter Verwendung eines zweiten Sensors (4), der in einem repräsentativen Windkraftgenerator (1) jeder der unterteilten Zonen installiert ist, umfasst.

3. Verfahren nach Anspruch 1, wobei das Überprüfen (ST202), ob sich Verunreinigungen an dem Flügel des Windkraftgenerators (1) angelagert haben oder nicht, das Überprüfen einer Größe und Fläche von an dem Flügel angelagertem Staub umfasst, wenn die an dem Flügel angelagerten Verunreinigungen der Staub sind.

4. Verfahren nach Anspruch 1, wobei Schritt b3) des erneuten Überprüfens der Wetterbedingungen im Umfeld der Windkraftanlage das Überprüfen einer Windgeschwindigkeit und eines Windvolumens im Umfeld des Windkraftgenerators (la), der die reduzierte Energieerzeugungsmenge aufweist, umfasst.

5. Verfahren nach Anspruch 1, wobei das individuelle Steuern (ST300) der Energieerzeugungsmenge des Windkraftgenerators (la) in Schritt c) umfasst:
c1) wenn sich eine Oberflächenrauigkeit eines Flügels des Windkraftgenerators (la), der die reduzierte Energieerzeugungsmenge aufweist, von einer anfänglich eingestellten Oberflächenrauigkeit geändert hat, erneutes Berechnen von Auftriebskraft und Luftwiderstandskraft;
c2) Anwenden (ST320) der neu berechneten Auftriebskraft und Luftwiderstandskraft auf den Windkraftgenerator (la), der die reduzierte Energieerzeugungsmenge aufweist; und
c3) Steuern eines Anstellwinkels des Flügels des Windkraftgenerators, der die reduzierte Energieerzeugungsmenge aufweist.

6. Verfahren nach Anspruch 1, wobei das individuelle Steuern (ST300) der Energieerzeugungsmenge des Windkraftgenerators (la) das Drehen eines Flügels des Windkraftgenerators, der die reduzierte Energieerzeugungsmenge aufweist, durch Erhöhen der Energieerzeugungsleistung des Windkraftgenerators umfasst.

## Revendications

1. Procédé de régulation d'une quantité de production d'une centrale éolienne (1), comprenant les étapes consistant à :
a) surveiller (ST100) un état de production de la centrale éolienne comprenant une pluralité de générateurs d'énergie éolienne (la), dans lequel ladite surveillance (ST00) de l'état de production de la centrale éolienne (1) comprend les étapes consistant à :
a1) recevoir des informations sur des conditions météorologiques actuelles (10) au sujet d'une région où est placée la centrale éolienne (1) et des informations sur des conditions météorologiques précédentes ; et
a2) surveiller une quantité de production de la centrale éolienne (la) par périodes sur la base des informations reçues sur les conditions météorologiques ;
b) analyser (ST200 ; 3) un facteur de réduction de quantité de production d'un générateur d'énergie éolienne (la) qui a une quantité de production réduite et qui appartient à la pluralité de générateurs d'énergie éolienne, si la quantité de production du générateur d'énergie éolienne (la) est réduite à une quantité de production plus faible qu'à l'état normal ; et
c) réguler individuellement (ST300) la quantité de production du générateur d'énergie éolienne (la) ayant la quantité de production réduite, sur la base du facteur de réduction analysé, de manière à augmenter la quantité de production ; dans lequel :
b1) ladite étape d'analyse du facteur de réduction de quantité de production comprend le fait de vérifier (ST202 ; 20) si des contaminants se sont fixés ou non à une pale du générateur d'énergie éolienne (la) en divisant la centrale éolienne en une pluralité de zones et en comparant entre eux des degrés de fixation des contaminants dans les zones divisées ;
et comprenant en outre les étapes consistant à :
b2) vérifier (ST204), lorsqu'il est déterminé que les contaminants ne se sont pas fixés à la pale, si une vitesse de rotation de la pale a été réduite ou non, si des vibrations ont été engendrées ou non dans la pale, et si un poids de la pale a été accru ou non ; et
b3) vérifier (ST206) de nouveau les conditions météorologiques autour de la centrale éolienne.

2. Procédé selon la revendication 1, dans lequel l'analyse (ST200) du facteur de réduction de quantité de production comprend la mise en œuvre sélective d'un procédé de détection d'une réduction de la quantité de production du générateur d'énergie éolienne (la) à l'aide d'un premier capteur (3) installé dans chacun des générateurs d'énergie éolienne (1) et d'un procédé de division de la centrale éolienne en zones et la détection d'une réduction de la quantité de production du générateur d'énergie éolienne à l'aide d'un second capteur (4) installé dans un générateur d'énergie éolienne représentatif (1) de chacune des zones divisées.

3. Procédé selon la revendication 1, dans lequel la vérification (ST202) de ce que des contaminants se sont fixés ou non à la pale du générateur d'énergie éolienne (1) comprend la vérification d'une taille et d'une aire de poussière fixée à la pale si les contaminants fixés à la pale sont de la poussière.

4. Procédé selon la revendication 1, dans lequel l'étape b3) vérifiant de nouveau les conditions météorologiques autour de la centrale éolienne comprend la vérification d'une vitesse du vent et d'un volume du vent autour du générateur d'énergie éolienne (la) ayant la quantité de production réduite.

5. Procédé selon la revendication 1, dans lequel ladite régulation individuelle (ST300) de la quantité de production du générateur d'énergie éolienne (la) à l'étape c) comprend les étapes consistant à :
c1) lorsque la rugosité de surface d'une pale du générateur d'énergie éolienne (la) ayant la quantité de production réduite a changé par rapport à une rugosité de surface initialement définie, calculer de nouveau une force de portance et une force de traînée ;
c2) appliquer (ST320) la force de portance et la force de traînée recalculées au générateur d'énergie éolienne (la) ayant la quantité de production réduite ; et
c3) régler un angle de calage de la pale du générateur d'énergie éolienne ayant la quantité de production réduite.

6. Procédé selon la revendication 1, dans lequel ladite régulation individuelle (ST300) de la quantité de production du générateur d'énergie éolienne (la) comprend la mise en rotation d'une pale du générateur d'énergie éolienne ayant la quantité de production réduite par augmentation de la puissance du générateur d'énergie éolienne.
